# EUROPEAN PATENT SPECIFICATION

(11) **EP 3 867 080 B1**
(45) Date of publication and mention of the grant of the patent: **26.06.2024**
(21) Application number: 19873891.6
(22) Date of filing: 09.10.2019
(51) Int. Cl.: B60C 7/10, B60C 11/01, B29D 30/00, B29D 30/72, B60C 13/00, B60C 7/14, B29D 30/02

(54) **NON-PNEUMATIC TIRE**
LUFTLOSER REIFEN
PNEU NON-PNEUMATIQUE

(30) Priority: 16.10.2018 US 201862746024 P
(43) Date of publication of application: 25.08.2021
(73) Proprietor: Bridgestone Americas Tire Operations, LLC, Nashville, TN 37201 (US)
(72) Inventor: YURJEVICH, Martin A., Canton, Ohio 44720 (US); ASPER, Robert W., Wadsworth, Ohio 44281 (US); DUMIGAN, Keith A., Kent, Ohio 44240 (US)
(74) Representative: Marks & Clerk LLP
(86) International application number: PCT/US2019/055331
(87) International publication number: WO 2020/081315

(56) References cited:
- WO-A1-2018/069610
- JP-A- 2013 107 509
- JP-A- 2013 240 928
- JP-U- H0 593 909
- JP-U- S4 898 803
- US-A1- 2009 107 596
- US-A1- 2016 303 916
- US-A1- 2017 072 746
- US-A1- 2017 120 680
- US-A1- 2018 009 262
- Michelin: "Michelin X TWEEL SSL", , 30 July 2018 (2018-07-30), pages 1-28, XP055920068, Retrieved from the Internet: URL:https://tweel.michelinman.com/on/deman dware.static/-/Sites-tweel-us-Library/defa ult/dw9228628a/pdf/Tweel_SSL_Service_Manua l.pdf [retrieved on 2022-05-11]

## Description

### FIELD OF INVENTION

The present invention is directed to a non-pneumatic tire provided with a tire structure for tire markings. More particularly to a recessed area on a tire with space for tire markings.

### BACKGROUND

Present pneumatic tires may have markings such as brands, tire specifications, etc. on a sidewall or shoulder region of the tire. The sidewall and shoulder regions of non-pneumatic tires, however, do not have sufficient area for tire markings. Additionally, pneumatic and non-pneumatic tires may have markings at the edge of the tread and sidewall. Placing the markings at the edge of the tread and sidewall, however, subjects the markings to wear and tear and does not make the markings particularly visible from the side view. Non-pneumatic tires provided with marlings are known from US 2017/072746 A1, and JP 2013 240928 A. Another non-pneumatic tire is known from US 2009/107596 A1.

### SUMMARY OF THE INVENTION

A non-pneumatic tire according to the present invention is defined in claim 1. Preferred embodiments of the invention are defined in the dependent claims.

### BRIEF DESCRIPTION OF THE DRAWINGS

In the accompanying drawings, structures are illustrated that, together with the detailed description provided below, describe exemplary embodiments of the claimed invention. Like elements are identified with the same reference numerals. It should be understood that elements shown as a single component may be replaced with multiple components, and elements shown as multiple components may be replaced with a single component. The drawings are not to scale and the proportion of certain elements may be exaggerated for the purpose of illustration.
**Figure 1** illustrates a partial perspective view of a prior art pneumatic tire utilizing conventional placement of indicia or tire markings;
**Figure 2A** illustrates a perspective view of one embodiment of a non-pneumatic tire **200** with a cut out portion for indicia or tire markings along the shoulder of the tire;
Figure 2B illustrates a partial cross-sectional view of the non-pneumatic tire 200 showing the cut out portion for indicia or tire markings along the shoulder of the tire;
**Figure 3A** illustrates a perspective view of one example of a non-pneumatic tire **300** with a beveled edge for indicia or tire markings along the entire shoulder of the tire;
**Figure 3B** illustrates a partial cross-sectional view of the non-pneumatic tire **300;**
**Figure 4** illustrates a partial perspective view of an alternative example of a non-pneumatic tire with a beveled edge portion for indicia or tire markings along part of the shoulder of the tire;
**Figure 5** illustrates a flowchart for making a tire with a cut out portion for indicia or markings;
**Figure 6** illustrates a partial perspective view of another alternative example of a non-pneumatic tire with a flat surface for indicia or tire markings along a support structure;
**Figure 7** illustrates a partial perspective view of one example of a non-pneumatic tire and hub assembly with a flat surface for indicia or tire markings along the hub; and

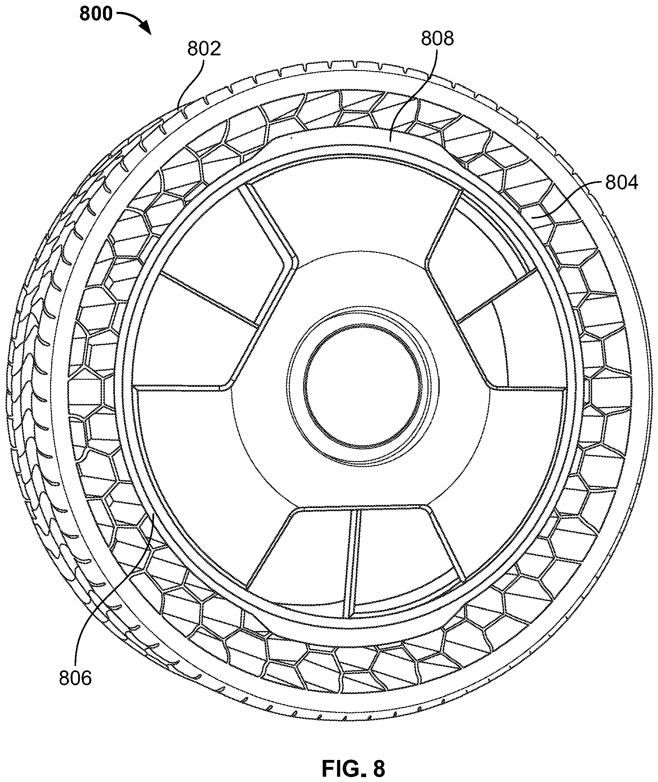

**Figure 8** illustrates a perspective view of an alternative example of a non-pneumatic tire and hub assembly with a flat surface for indicia or tire markings along the hub.

### DETAILED DESCRIPTION

The following includes definitions of selected terms employed herein. The definitions include various examples or forms of components that fall within the scope of a term and that may be used for implementation. The examples are not intended to be limiting.

"Axial" or "axially" refer to a direction that is parallel to the axis of rotation of a tire.

"Bead" refers to the part of the tire that contacts the wheel and defines a boundary of the sidewall.

"Circumferential" and "circumferentially" refer to a direction extending along the perimeter of the surface of the tread perpendicular to the axial direction.

"Equatorial plane" refers to the plane that is perpendicular to the tire's axis of rotation and passes through the center of the tire's tread.

"Radial" and "radially" refer to a direction perpendicular to the axis of rotation of a tire.

"Sidewall" refers to that portion of the tire between the tread and the bead.

"Tread" refers to that portion of the tire that comes into contact with the road under normal inflation and load.

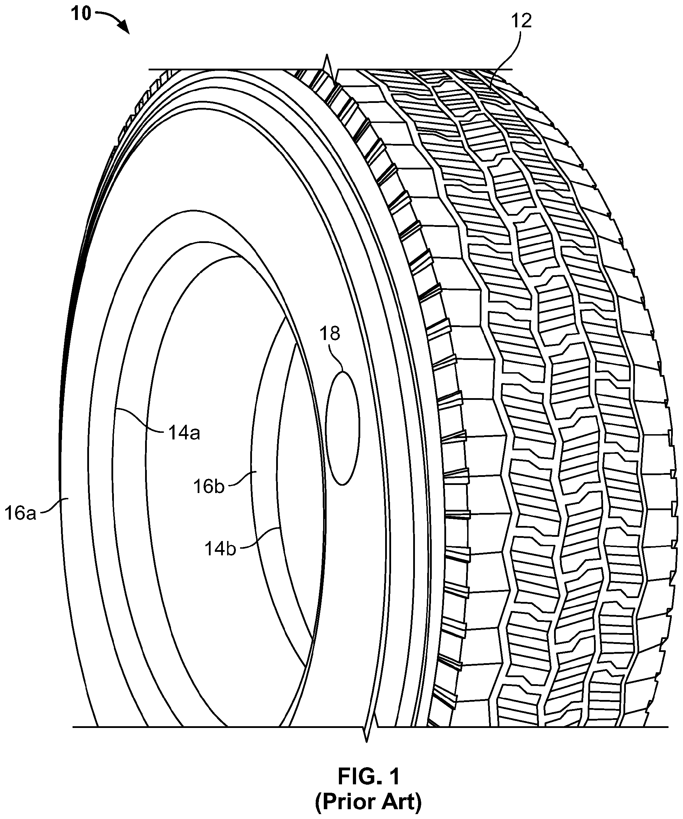

**Figure 1** illustrates a perspective view of a pneumatic tire **10** utilizing current conventional sidewall markings. The pneumatic tire **10** has a circumferential tread **12** and a pair of bead regions **14,** including a first bead region **14a** and a second bead region **14b.** A first sidewall **16a** extends from the first bead **14a** to the circumferential tread **12** and a second sidewall (not shown in this view) extends from the second bead **14b** to the circumferential tread **12.** The first sidewall **16a** includes an area for tire markings or indicia **18.** However, markings or indicia in this region of the tire are exposed to damage from objects such as curbs. Additionally, non-pneumatic tires may not have the same available sidewall space for placing markings or indicia.

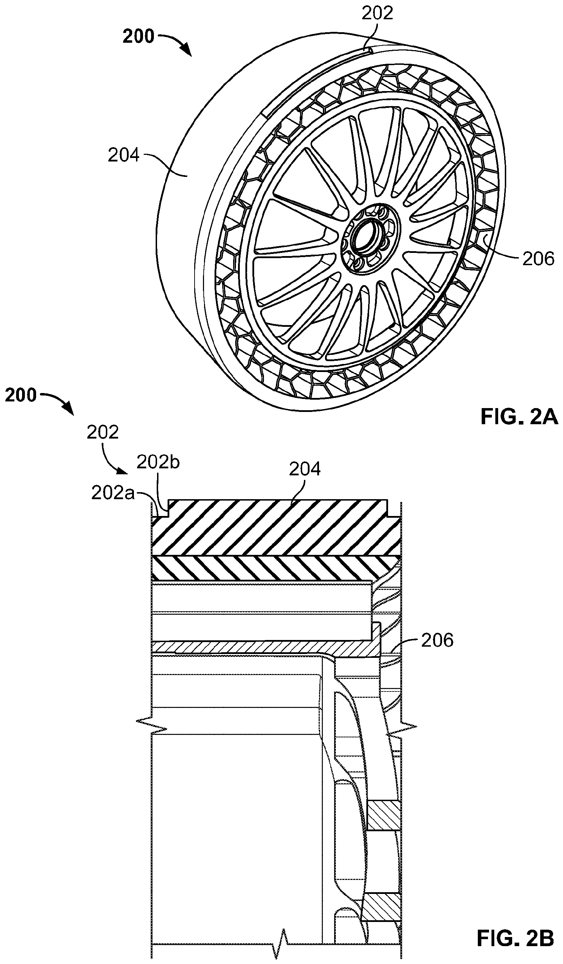

**Figure 2A** illustrates a perspective view of one embodiment of a non-pneumatic tire **200** with a cut out portion **202** for tire markings or indicia on the tire. The cut out portion **202** defines a location that is out of the wear area of the tread **204** of the non-pneumatic tire **200,** and that is protected from curb (or other obstacle) abrasion. In the illustrated embodiment, the cut out portion **202** is localized around the markings only. While a single cut out portion **202** is shown on each side of the tire, it should be understood that multiple cut out portions may be employed. In an alternative embodiment, the cut out portion may extend beyond the markings of the tire. For example, the cut out portion may be circumferential and continuous around the entire tire.

The non-pneumatic tire **200** also includes a support structure **206** that may be webbing or a spoke construction.

Figure 2B illustrates a close up cross-sectional view of the non-pneumatic tire **200,** and shows the cut out portion **202.** In the illustrated embodiment, the cut out portion **202** has a laterally extending flat surface **202a** and a radially extending flat surface **202b,** forming a right angle. In an embodiment of a non-pneumatic tire according to the present invention, the markings are disposed on the radially extending flat surface **202b.**

In alternative examples, the surfaces forming the cut out portion define an angle in the range of 45-135°. In embodiments not forming part of the invention, the angle of the lateral surface with respect to the radial direction may be between -45 and +45, and the angle of the radial surface with respect to the radial direction may be between -45 and +45. In other embodiments not forming part of the invention, the cutout portion may be defined by an angle outside these ranges, so long as the tire stability is maintained.

In an alternative embodiment, the cut out portion could have three or more surfaces. The cut out portion **202** is defined by straight flat surfaces in the illustrated embodiment. In embodiments not forming part of the invention, one or more of the surfaces may be curved.

The markings may be recessed onto the cut out portion **202.** In another embodiment, the markings are stamped onto the cut out portion **202.** In another embodiment, the markings may be molded onto the cut out portion **202.** In another embodiment, the markings may be painted or applied with ink onto the cut out portion **202.** In another embodiment, the markings may be applied to a decal, and the decal and applied to the cut out portion **202.**

In an alternative embodiment not forming part of the invention (not shown), the tire can be a pneumatic tire with a circumferential tread region. In the pneumatic tire, the support structure is defined by a pair of sidewalls, and the hub region is defined by a pair of beads. In the pneumatic tire, a cut out portion is formed in the shoulder between the tread region and the sidewalls.

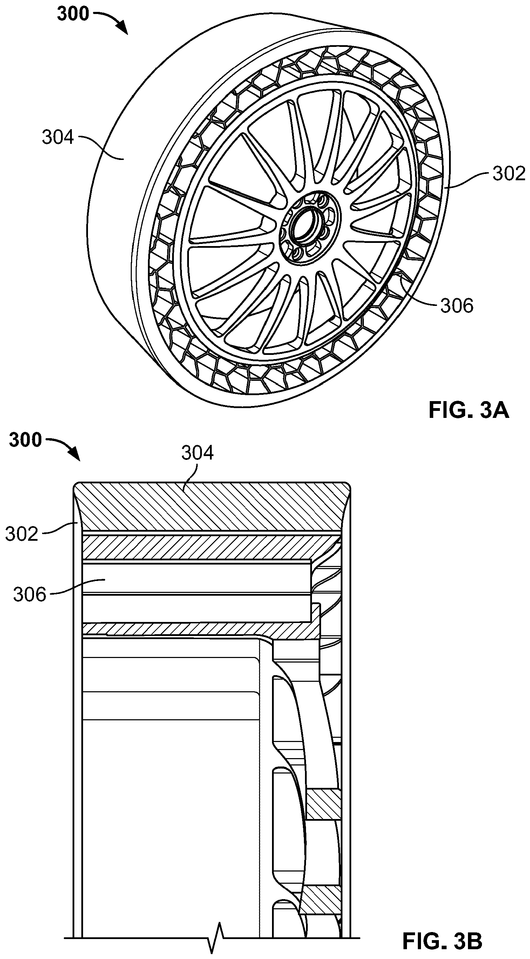

**Figure 3A** illustrates a non-pneumatic tire **300** with an undercut **302** that forms a cut out portion for indicia or tire markings along the entire shoulder of the tire. The non-pneumatic tire **300** includes a tread **304** and a support structure **306** that may be webbing or a spoke construction.

In the illustrated embodiment not forming part of the invention, the undercut **302** extends from the outer surface of the tread **304** to the support structure **306.** In an alternative embodiment not forming part of the invention, the undercut extends from an outer surface of the tread to an elevation radially above the support structure.

The undercut **302** has an angle in the range of 45-135° with respect to the radial direction. The markings may be placed on the surface of the undercut. In the illustrated embodiment not forming part of the invention, the undercut **302** extends continuously around the entire tire. In an alternative embodiment not forming part of the invention, the undercut only extends around a portion of the tire.

**Figure 3B** illustrating a close up cross-sectional view of a non-pneumatic tire **300** showing the undercut **302** for indicia or tire markings along the entire shoulder of the tire. In the illustrated embodiment not forming part of the invention, the undercut **302** is defined by a single curved surface. In an alternative embodiment not forming part of the invention, the undercut is defined by a single straight surface. In another alternative embodiment, the undercut is defined by multiple surfaces. By way of example, each of the surfaces may be straight or curved.

As with the embodiments discussed above with reference to Figures 2A and 2B, in an alternative to the embodiments shown in **Figures 3A** and **3B****,** the tire can be a pneumatic tire with a circumferential tread region. In the pneumatic tire, the support structure is defined by a pair of sidewalls, and the hub region is defined by a pair of beads. In such a pneumatic tire, a cut out portion is formed in the shoulder between the tread region and the sidewalls.

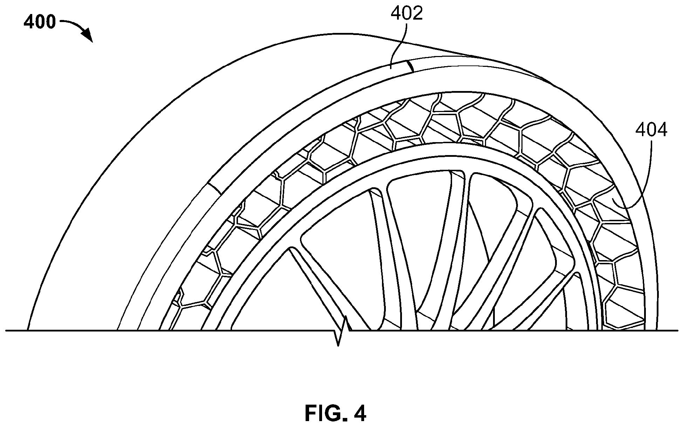

**Figure 4** illustrates a perspective view of a non-pneumatic tire **400** with a beveled edge **402** that forms a cut out portion for indicia or tire markings along part of the shoulder of the tire. The beveled edge **402** may be disposed at an angle between 10-80° with respect to the radial direction. In the illustrated embodiment not forming part of the invention, the beveled edge **402** is defined by a straight surface that extends along a portion of the circumference. In an alternative embodiment not forming part of the invention, a plurality of beveled edges may be employed on each side of the tire. In another alternative embodiment not forming part of the invention, the beveled edge may extend around the entire circumference of the tire. In yet another alternative embodiment not forming part of the invention, the beveled edge may be defined by a curved surface.

The markings may be recessed onto the beveled edge **402.** In another embodiment not forming part of the invention, the markings are stamped onto the beveled edge **402.** In another embodiment not forming part of the invention, the markings may be molded onto the beveled edge **402.** In another embodiment not forming part of the invention, the markings may be painted or applied with ink onto the beveled edge **402.** In another embodiment not forming part of the invention, the markings may be applied to a decal and applied to the beveled edge **402.**

As with the other embodiments discussed above, in an alternative to the **Figure 4** embodiment, the tire can be a pneumatic tire with a circumferential tread region. In the pneumatic tire, the support structure is defined by a pair of sidewalls, and the hub region is defined by a pair of beads. In such a pneumatic tire, a cut out portion is formed in the shoulder between the tread region and the sidewalls.

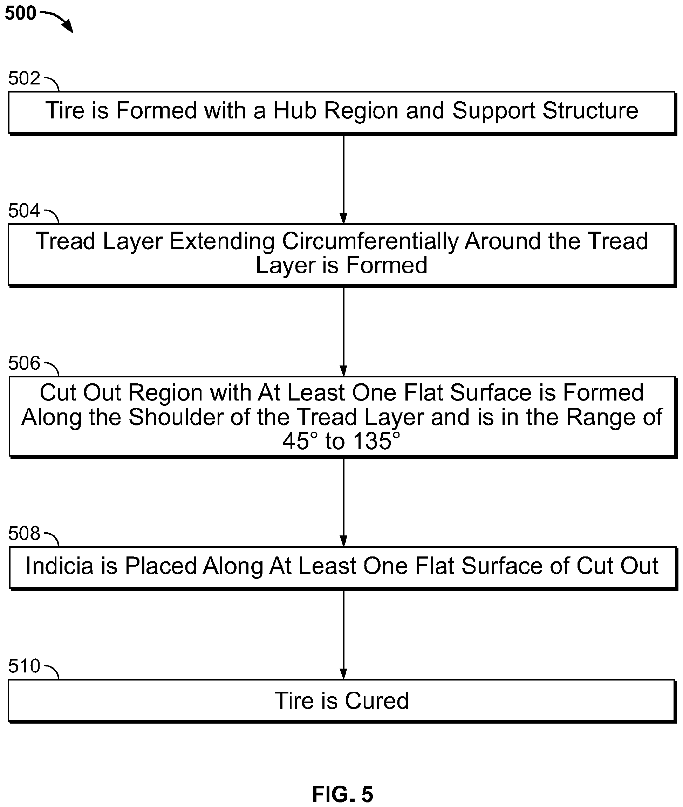

**Figure 5** shows a flowchart that illustrates an exemplary method **500** for making a tire with areas for indicia markings shielded from abrasions. At **502** the tire is formed according to known manufacturing processes. The tire may be a pneumatic or a non-pneumatic tire. A tread layer extending circumferentially around the tread layer is formed **504.** The formed tire includes a circumferential tread with a cutout region on the tread shoulder layer **506** with an angle in the range of 45° to 135°. Prior to curing the tire **510,** the tire markings or indicia are placed on the at least one flat surface **508.** As previously described, the cut out range may be outside of the 45° to 135° range so long as the tire remains stable or the indicia may be placed below the side edge of the tread band and may or may not be connected to the tread band. In an alternative example, the cut out is formed by an extrusion process, a 3D printing process, or cutting the rubber. In another embodiment example, the cut out portion is formed during the tire molding process.

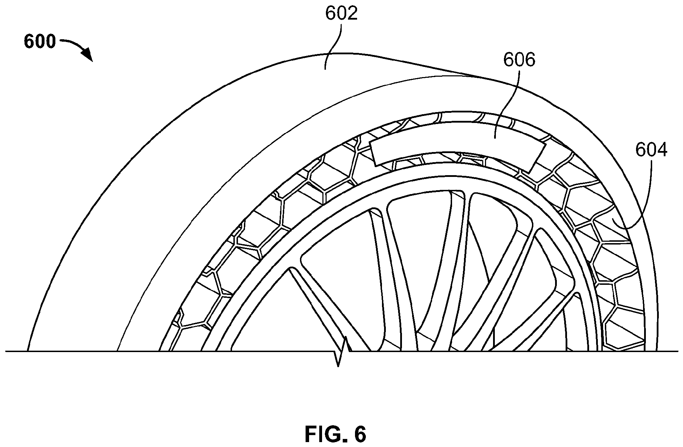

**Figure 6** illustrates a partial perspective view of another alternative embodiment of a non-pneumatic tire **600** not forming part of the invention. The tire **600** includes a circumferential tread **602** is disposed about a support structure **604.** In the illustrated embodiment not forming part of the invention, the support structure **604** is a webbing extending from an inner ring to an outer ring. In an alternative embodiment not forming part of the invention, the support structure may be a plurality of spokes.

A flat surface **606** for indicia or tire markings is disposed along the support structure **604.** In the illustrated embodiment not forming part of the invention, a single flat surface **606** extends along a portion of the support structure **604.** In an alternative embodiment not forming part of the invention, a flat surface extends circumferentially around the entire support structure. In another alternative embodiment not forming part of the invention, a plurality of flat surfaces are spaced about the support structure.

The flat surface **606** may be formed on the support structure **604** by a molding or 3D printing process. Alternatively, the flat surface **606** may be formed separately from, and then attached to the support structure **604.** In such an embodiment not forming part of the invention, the flat surface **606** may be attached to the support structure **604** with adhesive, a fastener (such as bolts or screws), or other known attachment means.

In one embodiment not forming part of the invention, the flat surface **606** is constructed of the same material as the support structure **604.** In an alternative embodiment not forming part of the invention, the flat surface **606** and the support structure **604** are constructed of different materials.

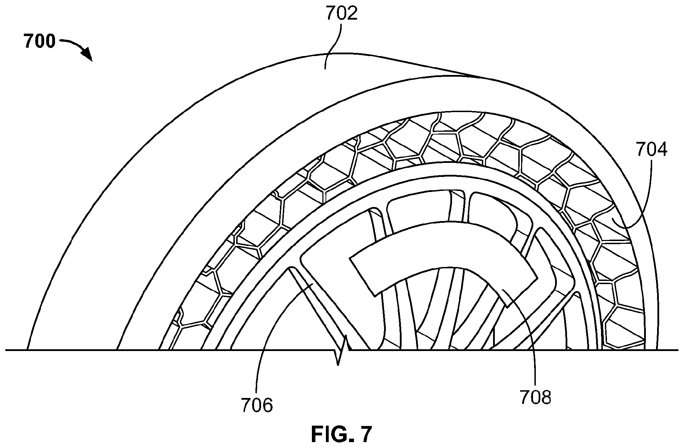

**Figure 7** illustrates a partial perspective view of one embodiment of a non-pneumatic tire and hub assembly **700** not forming part of the invention. The tire and hub assembly **700** includes tire having a circumferential tread **702** disposed about a support structure **704.** In the illustrated embodiment not forming part of the invention, the support structure **704** is a webbing extending from an inner ring to an outer ring. In an alternative embodiment not forming part of the invention, the support structure may be a plurality of spokes.

The hub includes a plurality of spokes **706.** A flat surface **708** for indicia or tire markings is disposed along the spokes **706.** In the illustrated embodiment not forming part of the invention, a single flat surface **708** extends along a portion of the spokes **706.** In an alternative embodiment not forming part of the invention, a flat surface extends circumferentially around all of the spokes. In another alternative embodiment not forming part of the invention, a plurality of flat surfaces are spaced about the spokes.

The flat surface **708** may be formed on the spokes **706** by a molding or 3D printing process. Alternatively, the flat surface **708** may be formed separately from, and then attached to the spokes **706.** In such an example, the flat surface **708** may be attached to the spokes **706** with adhesive, a fastener (such as bolts or screws), or other known attachment means.

In one embodiment not forming part of the invention, the flat surface 708 is constructed of the same material as the spokes **706.** In an alternative embodiment not forming part of the invention, the flat surface **708** and the spokes **706** are constructed of different materials.

**Figure 7** illustrates a perspective view of an alternative embodiment of a non-pneumatic tire and hub assembly **800** not forming part of the invention. The tire and hub assembly **700** includes tire having a circumferential tread **802** disposed about a support structure **804.** In the illustrated embodiment not forming part of the invention, the support structure **804** is a webbing extending from an inner ring to an outer ring. In an alternative embodiment not forming part of the invention, the support structure may be a plurality of spokes.

A ring **806** is disposed between the tire and the hub. In one embodiment not forming part of the invention, the ring **806** is the inner ring of the non-pneumatic tire. In an alternative embodiment not forming part of the invention, the ring **806** is an outer ring of the hub. In yet another embodiment not forming part of the invention, the ring is separate from and attached to the non-pneumatic tire and the hub.

In the illustrated embodiment not forming part of the invention, pair of flat surfaces **808** for indicia or tire markings extend from the ring **806.** The flat surfaces **808** extend in a substantially radial direction. While a pair of flat surfaces **808** are illustrated, it should be understood that any number of flat surfaces may extend from the ring. For example, the flat surface may be a flange that extends circumferentially about the entire ring.

In one embodiment not forming part of the invention, the flat surface 808 is constructed of the same material as the webbing **804.** In an alternative embodiment not forming part of the invention, the flat surface **808** and the webbing **804** are constructed of different materials.

While the present invention has been illustrated by the description of embodiments thereof, and while the embodiments have been described in considerable detail, it is not the intention of the applicants to restrict or in any way limit the scope of the appended claims to such detail. Additional advantages and modifications will readily appear to those skilled in the art. Therefore, the invention, in its broader aspects, is not limited to the specific details, and illustrative examples shown and described.

## Claims

1. A non-pneumatic tire (200) comprising:
a hub region having an axis of rotation;
a support structure (206) extending from the hub region; and
a tread layer (204) extending circumferentially around the support structure (206) and having a flat top surface,
wherein the tread layer (204) has a shoulder with a cut out portion (202) extending circumferentially,
wherein the cut out portion (202) has a first laterally extending flat surface(202a) and a second radially extending flat surface (202b), forming a right angle, and
wherein the second radially extending flat surface (202b) forms a right angle with the adjacent flat top surface of the tread layer (204);
**characterised in that** at least one indicia is disposed on the second radially extending flat surface (202b).

2. The tire (200) of claim 1, wherein the support structure (206) is a plurality of spokes.

3. The tire (200) of claim 1, wherein the support structure (206) is a webbing.

4. The tire (200) of claim 1, wherein the second radially extending flat surface (202b) has stamped markings.

5. The tire (200) of claim 1, wherein the second radially extending flat surface (202b) has recessed markings.

6. The tire (200) of claim 1, wherein the indicia is disposed on an applique affixed to the second radially extending flat surface (202b).

## Patentansprüche

1. Luftloser Reifen (200), umfassend:
einen Nabenbereich, der eine Drehachse aufweist;
eine Trägerstruktur (206), die sich von dem Nabenbereich aus erstreckt; und
eine Laufflächenschicht (204), die sich im Umfangsrichtung um die Trägerstruktur (206) herum erstreckt und eine flache obere Oberfläche aufweist,
wobei die Laufflächenschicht (204) eine Schulter mit einem Ausschnittsabschnitt (202) aufweist, der sich in Umfangsrichtung erstreckt,
wobei der Ausschnittsabschnitt (202) eine erste sich seitlich erstreckende flache Oberfläche (202a) und eine zweite sich radial erstreckende flache Oberfläche (202b) aufweist, die einen rechten Winkel ausbilden, und
wobei die zweite sich radial erstreckende flache Oberfläche (202b) einen rechten Winkel mit der benachbarten flachen oberen Oberfläche der Laufflächenschicht (204) ausbildet;
**dadurch gekennzeichnet, dass** mindestens ein Kennzeichen auf der zweiten sich radial erstreckenden flachen Oberfläche (202b) angeordnet ist.

2. Reifen (200) nach Anspruch 1, wobei die Trägerstruktur (206) eine Vielzahl von Speichen ist.

3. System (200) nach Anspruch 1, wobei die Trägerstruktur (206) ein Gurtband ist.

4. Reifen (200) nach Anspruch 1, wobei die zweite sich radial erstreckende flache Oberfläche (202b) eingeprägte Markierungen aufweist.

5. Reifen (200) nach Anspruch 1, wobei die zweite sich radial erstreckende flache Oberfläche (202b) vertiefte Markierungen aufweist.

6. Reifen (200) nach Anspruch 1, wobei das Kennzeichen auf einer Applikation angeordnet ist, die an der zweiten sich radial erstreckenden flachen Oberfläche (202b) befestigt ist.

## Revendications

1. Pneu non pneumatique (200) comprenant :
une zone de moyeu ayant un axe de rotation ;
une structure de support (206) s'étendant à partir de la zone de moyeu ; et
une couche de roulement (204) s'étendant circonférentiellement autour de la structure de support (206) et présentant une surface supérieure plane,
dans lequel la couche de roulement (204) a un épaulement avec une partie découpée (202) s'étendant sur la circonférence,
dans laquelle la partie découpée (202) présente une première surface plane s'étendant latéralement (202a) et une seconde surface plane s'étendant radialement (202b), formant un angle droit, et
dans laquelle la seconde surface plane s'étendant radialement (202b) forme un angle droit avec la surface supérieure plane adjacente de la couche de roulement (204) ;
**caractérisé en ce que** au moins un indice est disposé sur la seconde surface plane s'étendant radialement (202b).

2. Pneu (200) selon la revendication 1, dans lequel la structure de support (206) est une pluralité de rayons.

3. Pneu (200) selon la revendication 1, dans lequel la structure de support (206) est une sangle.

4. Pneu (200) selon la revendication 1, dans lequel la seconde surface plane s'étendant radialement (202b) comporte des marques estampées.

5. Pneu (200) selon la revendication 1, dans lequel la seconde surface plane s'étendant radialement (202b) comporte des marques en creux.

6. Pneu (200) selon la revendication 1, dans lequel l'indication est disposée sur une applique fixée à la seconde surface plane s'étendant radialement (202b).
